# EUROPEAN PATENT SPECIFICATION

(11) **EP 2 065 226 B1**
(45) Date of publication and mention of the grant of the patent: **07.09.2011**
(21) Application number: 07807436.6
(22) Date of filing: 18.09.2007
(51) Int. Cl.: B60C 9/18, B60C 9/20, B60C 9/22, B60C 9/26

(54) **RADIAL TIRE FOR HEAVY LOAD**
RADIALREIFEN FÜR SCHWERTRANSPORT
PNEU À CARCASSE RADIALE POUR UN CHARGEMENT LOURD

(30) Priority: 22.09.2006 JP 2006257700
(43) Date of publication of application: 03.06.2009
(73) Proprietor: Sumitomo Rubber Industries, Ltd., Kobe-shi, Hyogo 651-0072 (JP)
(72) Inventor: MANNO, Akira c/o Sumitomo Rubber Industries, Ltd., Kobe-shi Hyogo 651-0072 (JP)
(74) Representative: Thul, Stephan
(86) International application number: PCT/JP2007/068032
(87) International publication number: WO 2008/035646

(56) References cited:
- EP-A2- 0 410 673
- JP-A- 06 183 207
- JP-A- 08 188 009
- JP-A- 10 175 405
- JP-A- 11 020 405
- JP-A- 11 105 152
- JP-A- 11 314 503
- JP-A- 2004 009 760
- US-A- 4 987 938

## Description

### TECHNICAL FIELD

The present invention relates to a heavy duty radial tire with an aspect ratio of 50 % or less in which growth of outer diameter in tread shoulder regions is suppressed by modifying the belt layer to thereby enhance the wear resistance and durability of the tire.

### BACKGROUND ART

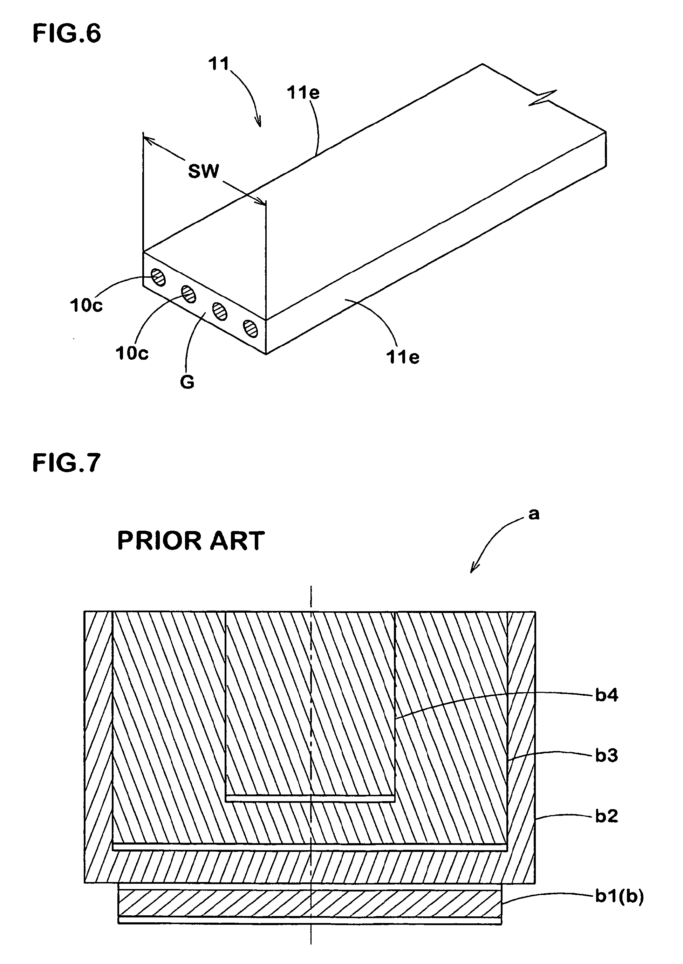

In heavy duty radial tires used for vehicles such as trucks and buses, as shown in Fig. 7, a belt layer "a" which is disposed radially outward of a carcass is generally composed of three or four belt plies "b" of steel belt cords. In conventional tires, disposed on the radially innermost side is a first belt ply b1 of belt cords arranged at a relatively large angle of 40 to 70° with respect to the tire equator, and subsequently disposed radially outward of the first ply are second and third belt plies or second to fourth belt plies b2-b4 of belt cords arranged at an angle of 10 to 35° with respect to the tire equator. The 2nd and 3rd belt plies b2 and b3 are stacked so that the belt cords in the 2nd ply cross the cords in the 3rd belt ply. By such an arrangement is formed a triangle structure that belt cords cross each other between the 1st and 2nd belt plies b1 and b2 and between the 2nd and 3rd belt plies b2 and b3, whereby the belt rigidity is increased to reinforce a tread portion by a hoop effect (see for example Patent Literature 1).
Patent Literature 1: JP-A-08-244407

US 4 987 938 A discloses a tire in accordance with the preamble of claim 1.

### DISCLOSURE OF THE INVENTION

### Problem to be Solved by the Invention

On the other hand, with increase of expressway and development of high performance vehicles, use of low aspect ratio tires as heavy duty tires is increasing since the aspect ratio of the section height of tire to the section width of tire (ratio of section height/ section width) is low and therefore the steering stability is good. However, in case of low aspect ratio tires, particularly tires having an aspect ratio of 50 % or less, a conventional belt structure cannot exhibit a sufficient binding force since the tread portion is wide and the tread profile is flat. Thus, owing to centrifugal force, repeated deformation by ground contact/release, high internal pressure and the like, there occurs a so-called growth of outer diameter that the outer diameter of a tread portion gradually increases from the initial stage of use. In particular, the outer diameter growth becomes large in tread shoulder regions. As a result, the ground contact pressure increases nonuniformly in the tread shoulder regions to induce uneven wear, and separation damage (separation at belt edges) starting from the axially outer edges of the belt layer also occurs by degradation of a rubber owing to temperature rise.

Accordingly, it is an object of the present invention to provide a low aspect ratio heavy duty radial tire having an aspect ratio of at most 50 % in which the outer diameter growth in tread shoulder regions is effectively suppressed to enhance the uneven wear resistance and the durability. This object is achieved by forming a radially outermost belt ply out of a spiral wind ply in which a steel cord is spirally wound in the tire circumferential direction, and applying thereto a fold structure in which both axial edge portions of the spiral wind ply is turned back toward the tire equator.

### Means to Solve the Invention

The present invention provides a heavy duty radial tire having an aspect ratio of at most 50 % and comprising a carcass which extends from a tread portion to each of bead cores in bead portions through sidewall portions, and a belt layer disposed inside the tread portion and radially outward of the carcass, wherein:
said belt layer comprises a plurality of belt plies stacked in the radial direction in which belt cords of the belt plies other than a radially outermost belt ply are arranged at an angle θ of 10 to 70° with respect to the tire circumferential direction, and
said radially outermost belt ply is made of a spiral wind ply formed by spirally winding a ribbon-like strip which comprises a topping rubber and a single or a plurality of steel belt cords covered with the topping rubber, in the circumferential direction of tire, and
said radially outermost belt ply has an outermost ply main body portion which extends from the tire equator to ply folding back positions Po located on both sides of the tire equator, and outermost ply fold portions which are folded back at the ply folding back positions Po toward the tire equator in a U shape and extend to outermost ply inner positions Pi, in which
the axial width CWa of the outermost ply main body portion is from 70 to 80 % of a tread ground contact width TW, and the axial width CWb of each of the outermost ply fold portions is at least 5.0 mm and is at most 0.5 times the axial width CWa of the outermost ply main body portion.

The term "tread ground contact width TW" as used herein means the maximum axial width of a ground contact area of a tread that contacts a flat surface when a tire is mounted on a standard rim, inflated to a normal inner pressure and such a tire in the normal inner pressure conditions is then loaded with a normal load. The term "standard rim" denotes a rim defined for every tire in a standardizing system on which the tire is based and is, for example, "standard rim" in JATMA, "Design Rim" in TRA and "Measuring Rim" in ETRTO. The term "normal inner pressure" denotes an air pressure defined for every tire in the standardizing system and is, for example, the "maximum air pressure" in JATMA, the maximum value recited in the table of "Tire Load Limits at Various Cold Inflation Pressures" in TRA, and the "Inflation Pressure" in ETRTO". The term "normal load" denotes a load defined for every tire in the standardizing system and is, for example, the maximum load capacity in JATMA, the maximum value recited in the table of "Tire Load Limits at Various Cold Inflation Pressures" in TRA, and the "Load Capacity" in ETRTO.

In the specification, the "dimensions" of respective parts or portions of the tire denotes those measured with respect to the tire in the above-mentioned normal inner pressure conditions under no loading, unless otherwise noted.

### Effects of the Invention

In the heavy duty tires of the present invention, a radially outermost belt ply of belt plies is formed of a spiral wind ply in which a belt cord is spirally wound in the tire circumferential direction, and to the spiral wind ply is applied a fold structure in which both axial edge portions of the spiral wind ply are folded back toward the tire equator.

According to the present inventor's investigation, in case of heavy duty radial tires having a high inner pressure of 700 kPa or more and a low aspect ratio of 50 % or less, no sufficient force of binding the belt edge portions is obtained by merely forming the outermost belt ply out of the spiral wind ply, so the outer diameter growth cannot be prevented in good balance. Thus, it would be conceived to dispose two layers of the spiral wind ply in the tread shoulder portions. However, a large tension acts on the both axial edges of the spiral wind ply. Since a belt cord is ended at a wind-starting portion or a wind-ending portion in the initial round of winding or the last round of winding of the spiral wind ply, the wind-starting portion and the wind-ending portion is poor in strength. Therefore, even if a two layer structure is applied, a strain generates at the wind-starting portion or the wind-ending portion to cause damages such as cord breaking, since the cord is ended at the axially outer edge of the spiral wind ply when the wind-starting or wind-ending portion is located at the axially outer edge of the spiral wind ply.

In the present invention, however, since a fold structure is applied to the spiral wind ply, the wind-starting or wind-ending portion of the spiral winding can be prevented from locating at the axial edges of the spirally wound ply. That is to say, the belt cord continuously extends in the circumferential direction of tire without ending at the axial edges of the spiral wind ply which are the folding back positions. Therefore, even in heavy duty radial tires having an aspect ratio of 50 % or less, the outer diameter growth of the tread shoulder portions can be effectively prevented to improve the uneven wear resistance. Further, the belt edge separation caused by temperature rise resulting from increase in ground contact pressure and the cord breaking at the axial edges of the spiral wind ply can also be prevented to improve the durability.

### BRIEF DESCRIPTION OF THE DRAWINGS

Fig. 1 is a cross sectional view of a heavy duty radial tire showing an embodiment of the present invention;
Fig. 2 is a cross sectional view showing a part of a tread portion of the tire of Fig. 1 in an enlarged form;
Fig. 3 is a view illustrating a cord arrangement of belt plies;
Figs. 4(A) and 4(B) are views illustrating a manner of winding a ribbon-like strip;
Fig. 5 is a graph showing a load-elongation curve of a belt cord of a spiral wind ply;
Fig. 6 is a perspective view illustrating a ribbon-like strip; and
Fig. 7 is a view illustrating a cord arrangement of belt plies in a conventional tire.

### Explanation of Symbols

2. Tread portion
3. Sidewall portion
4. Bead portion
5. Bead core
6. Carcass
7. Belt layer
9A. First belt ply
9B. Second belt ply
9C. Third belt ply
9D. Fourth belt ply
10. Outermost belt ply
10A. Outermost ply main body portion
10B. Outermost ply fold portion
11. Ribbon-like strip
12. Spiral wind ply

### BEST MODE FOR CARRYING OUT THE INVENTION

An embodiment of the present invention will now be explained with reference to the accompanying drawings.

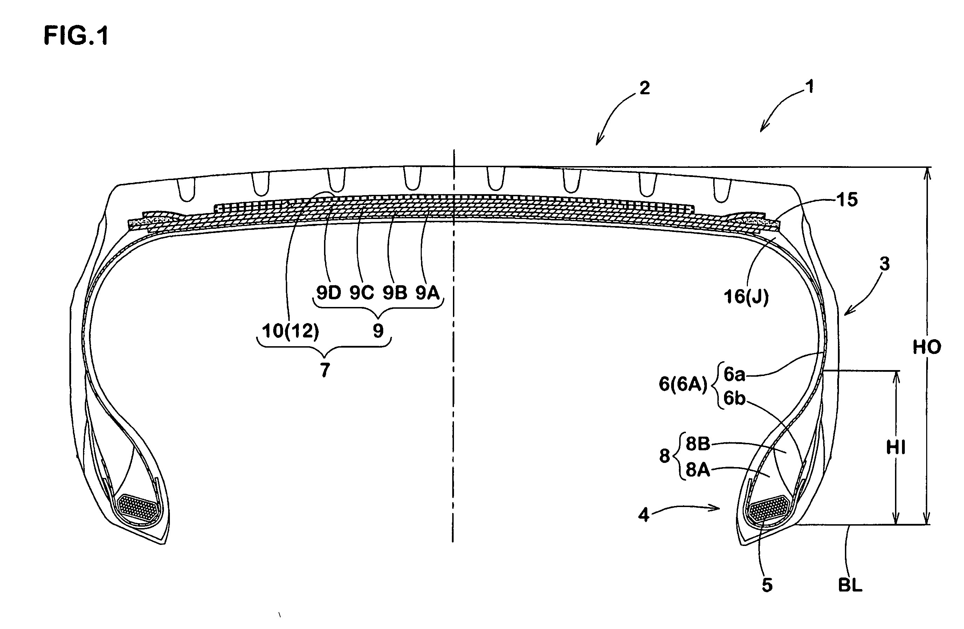

As shown in Fig. 1, heavy duty radial tire 1 is a low aspect ratio tire that the aspect ratio which is a ratio of the section height of tire to the section width of tire (tire section height/tire section width) is reduced to 50 % or less, and it includes, at least, a carcass 6 that extends from a tread portion 2 to each of bead cores 5 in opposing bead portions 4 through sidewall portions 3, and a belt layer 7 that is disposed inside the tread portion 2 and radially outward of the carcass 6.

The carcass 6 comprises at least one carcass ply 6A (in this embodiment, one carcass ply) in which carcass cords are disposed at an angle of, for example, 75 to 90° with respect to the tire circumferential direction. The carcass ply 6A is composed of a ply main portion 6a that extends between the bead cores 5, 5, and ply turnup portions 6b that are continuous with the both ends of the main portion 6a and are turned up around the bead cores 5 from the axially inside to the axially outside of the tire. Between the ply main portion 6a and each ply turnup portion 6b is disposed a bead apex rubber 8 for bead reinforcement having a triangular cross section that extends radially outwardly from the bead core 5. Steel cords are preferred as a carcass cord, but organic fiber cords can also be used, as occasion demands, e.g., aromatic polyamide, nylon, rayon and polyester cords.

The bead apex rubber 8 shown in this embodiment has a two layer structure composed of a radially inner apex portion 8A made of a hard rubber having a hardness of 80 to 95 and a radially outer apex portion 8B made of a soft rubber having a hardness of 40 to 60. The height HI of the bead apex rubber 8 from a bead base line BL to its tip is from 35 to 50 % of the section height HO of the tire. By such a bead apex rubber, the side rigidity of the tire is enhanced to improve the steering stability, while suppressing occurrence of damages at its tip.

The belt layer 7 comprises a plurality of belt plies which are radially stacked one after another and in which a steel cord is used as a belt cord. Belt plies 9 other than an outermost belt ply 10 disposed on the radially outermost side of the belt layer are disposed so that the belt cords are oriented at an angle θ of 10 to 70° with respect to the tire circumferential direction.

In this embodiment is illustrated a belt layer 7 in which first to fifth belt plies 9A to 9D and 10 are stacked one after another in that order from radially inward toward radially outward of the tire.

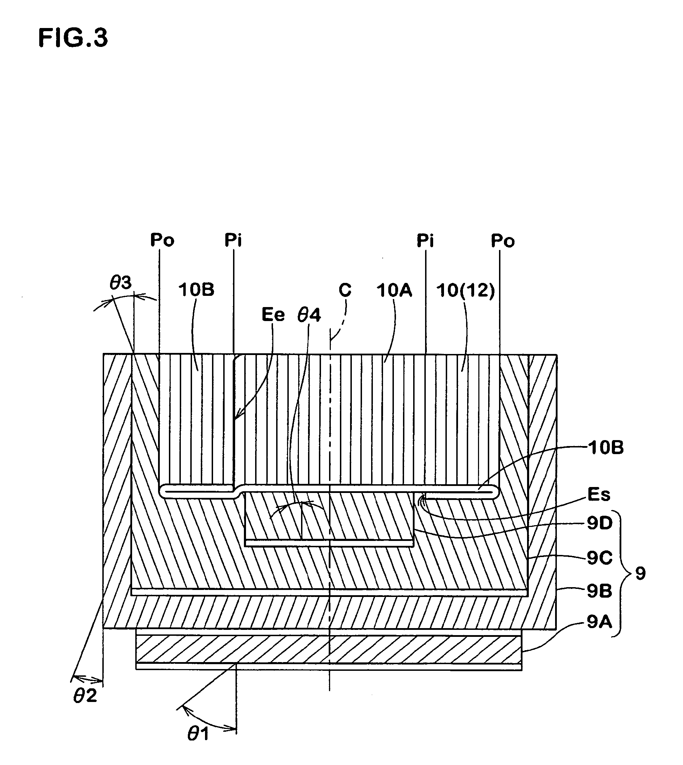

Of these, as shown in Fig. 3, the first belt ply 9A is disposed on the radially innermost side of the belt layer so that the belt cords are oriented at an angle θ1 of 40 to 70° with respect to the tire circumferential direction. The second belt ply 9B is disposed on a radially outer surface of the first belt ply 9A so that the belt cords are oriented at an angle θ2 which is smaller than the angle θ1 and falls within the range of 10 to 45° with respect to the tire circumferential direction. The third belt ply 9C is disposed on a radially outer surface of the second belt ply 9B so that the belt cords are oriented at an angle θ3 which is smaller than the angle θ1 and falls within the range of 10 to 45° with respect to the tire circumferential direction provided that the slanting direction of the cords is reverse to that of the second belt ply 9B. The fourth belt ply 9D is disposed radially outward of the third belt ply 9C so that the belt cords are oriented at an angle 64 which is smaller than the angle θ1 and falls within the range of 10 to 45° with respect to the tire circumferential direction in the same slanting direction as that of the third belt ply 9C.

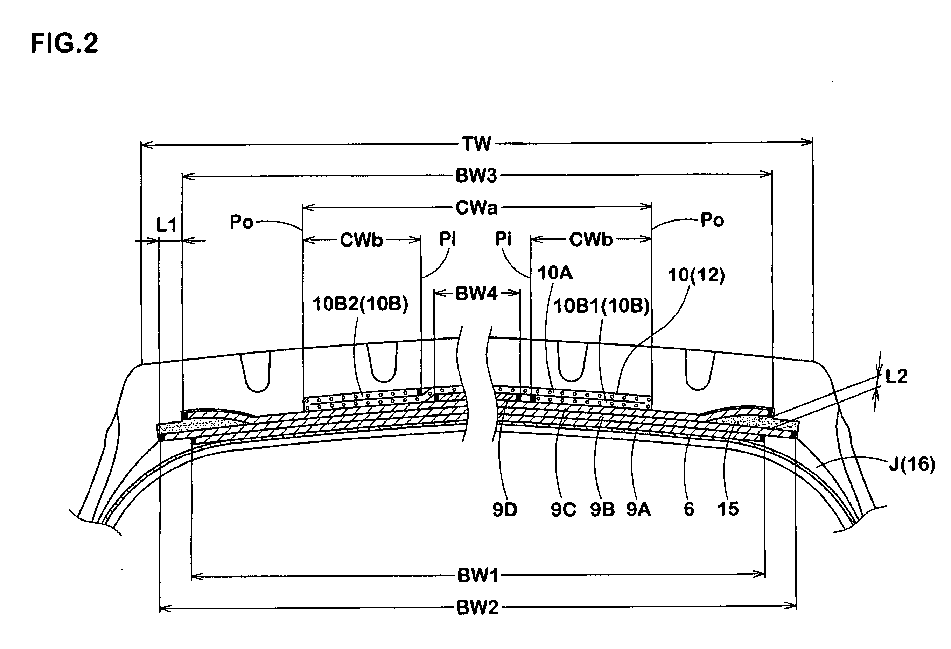

The axial widths BW2 and BW3 of the second and third belt plies 9B and 9C are within the range of 85 to 98 % of the tread ground contact width TW, respectively. In this embodiment, as shown in Fig. 2, the second belt ply 9B has the largest width among five belt plies 9A to 9D and 10. In that case, it is preferable that a difference "BW2 - BW3" between the widths BW2 and BW3 is at least 14 mm, in other words, the axially outer edge of the second belt ply 9B and the axially outer edge of the third belt ply 9C are spaced from each other by an axial distance L1 of at least 7 mm, whereby stress concentration to the outer edges of the second and third belt plies 9B and 9C can be eased.

If the widths BW2 and BW3 are less than 85 % of the tread ground contact width TW, the tread rigidity will be insufficient in tread shoulder portions and accordingly no excellent steering stability is obtained. If the widths BW2 and BW3 are more than 98 %, the space between the axially outer edges of the belt plies 9B and 9C and a buttress surface becomes too small, so cracking damage starting from the outer edges tends to occur. From the same points of view, it is preferable that the axial width BW1 of the first belt ply 9A is within the range of 85 to 98 % of the tread ground contact width TW. The fourth belt ply 9D has the smallest width BW4 among five belt plies 9A to 9D and 10, and serves as a breaker for protecting the first to third belt plies 9A to 9C and the carcass 6 from external injury. The fourth belt ply 9D may be omitted as occasion demands.

The fifth belt ply 10, namely the radially outermost belt ply 10, is formed as a spiral wind ply 12 prepared by spirally and circumferentially winding a ribbon-like strip 11 (shown in Fig. 6) in which a single or a plurality of steel cords as a belt cord 10c, e.g., 3 to 10 belt cords 10c, are covered with a topping rubber G. Therefore, in the outermost belt ply 10, the belt cords 10C are arranged at an angle of substantially 0° with respect to the circumferential direction. The ribbon-like strip 11 is wound in such a manner that the side edges 11e of the strip 11 of adjacent windings come into contact with each other or are spaced from each other. The width SW of the ribbon-like strip 11 is smaller than the axial width CWb mentioned after of the ply fold portion 10B of the outermost belt ply 10. Usually, the width SW is from 2 to 35 mm.

The outermost belt ply 10 is formed into a fold structure such that, as shown in Fig. 3, it comprises an outermost ply main body portion 10A which extends from the tire equator C to ply folding back positions Po located on both sides of the tire equator C, and outermost ply fold portions 10B, 10B which are folded back in a U shape at the ply folding back positions Po toward the tire equator C and extend to outermost ply inner positions Pi.

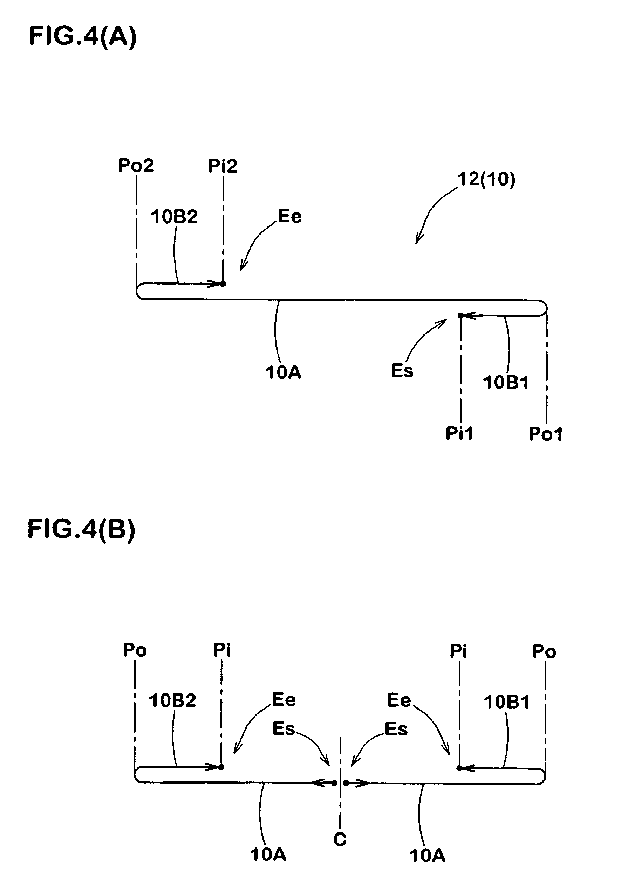

It is important that spiral winding-starting edge Es and spiral winding-ending edge Ee of the ribbon-like strip 11 are not located at the outermost ply folding back positions Po. For this purpose, in this embodiment, a single ribbon-like strip 11 is spirally wound, as shown in Fig. 4(A), from an "outermost ply inner position Pi1 on one side" to an "outermost ply folding back position Po1 on one side", then to an "outermost ply folding back position Po2 on the other side", and finally to an "outermost ply inner position Pi2 on the other side" in that order, whereby the starting edge Es and the ending edge Ee can be located at the ply inner positions Pi1 and Pi2 on one side and the other side, respectively. In this case, an outermost ply fold portion 10B1 on one side is folded back radially inward of the outermost ply main body portion 10A, and an outermost ply fold portion 10B2 on the other side is folded back radially outward of the outermost ply main body portion 10A.

Further, as shown in Fig. 4(B), the spiral wind ply 12 can also be formed using two ribbon-like strips 11, 11. In this case, each strip 11 is spirally wound from the "tire equator C" to the "outermost ply folding back position Po" and then to the "outermost ply inner position Pi", whereby the starting edge Es and the ending edge Ee can be located at the tire equator C and the ply inner position Pi, respectively. Thus, the outermost ply fold portion 10B1 on one side and the outermost ply fold portion 10B2 on the other side are folded back radially outward of the outermost ply main body portion 10A.

In the belt layer 7 so constructed, the outermost belt ply 10 is made of a spiral wind ply 12 prepared by spirally winding the ribbon-like strip 11 and has a fold structure that the both edge portions of the spiral wind ply 12 are folded back toward the tire equator. Therefore, a lacking binding force of a belt layer at tread shoulder regions can be enhanced by two layers of the ply main body portion 10A and the ply hold portion 10B of the outermost belt ply 10 to exhibit an excellent hoop effect over a wide range. Thus, the outer diameter growth of the tread portion can be uniformly suppressed, and besides, generation of uneven wear resulting from the outer diameter growth and belt edge separation can be prevented. Furthermore, since the spiral wind ply 12 is formed to have a fold structure, the belt cords 10c extend continuously in the tire circumferential direction at the axial edges of the spiral wind ply 12 which are the outermost ply folding back positions Po without being ended there. Therefore, belt damage such as belt cord breaking at the ply folding back positions Po can be prevented from occurring, as compared with a case where two belt plies are merely stacked up, and the durability can be comprehensively improved.

For achieving these effects, it is required that the axial width CWa of the outermost ply main body portion 10A is from 70 to 80 % of the tread ground contact width TW, and the axial width CWb of each of the outermost ply fold portions 10B is at least 5.0 mm and is at most 0.5 times the axial width CWa of the main body portion 10A.

If the width CWa of the outermost ply main body portion 10A is less than 70 % of the tread ground contact width TW, the hoop effect is not sufficiently exhibited over the entire tread ground contact surface and accordingly the outer diameter growth at the tread shoulder portions cannot be suppressed. If the width CWa is more than 80 % of the tread ground contact width TW, tension acting at the ply folding back positions Po becomes too large, so cord breaking of the spiral wind ply 12 is easy to occur.

If the width CWb of the outermost ply fold portion 10B is less than 5 mm, effects produced by the hold structure are not sufficiently obtained, so the outer diameter growth cannot be sufficiently suppressed and, further, cord breaking of the spiral wind ply 12 is easy to occur. If the width CWb is more than 0.5 times the axial width CWa of the main body portion 10A, the ply fold portions 10B overlaps to form three layers on a tire equator side. Thus, balance in binding force is impaired to deteriorate the uneven wear resistance, and it is also disadvantageous in production cost and production efficiency. From such points of view, it is preferable that the width CWb is at least 15 mm, especially at least 30 mm. Also, the width CWa is larger than the width SW of the ribbon-like strip 11.

In case that the belt layer 7 additionally has a fourth belt ply 9D, the fourth belt ply 9D is provided so that both axial edges thereof are located axially inward of the outermost ply inner positions Pi, whereby the change in thickness of the belt layer 7 owing to the outermost ply fold portions 10B can be reduced.

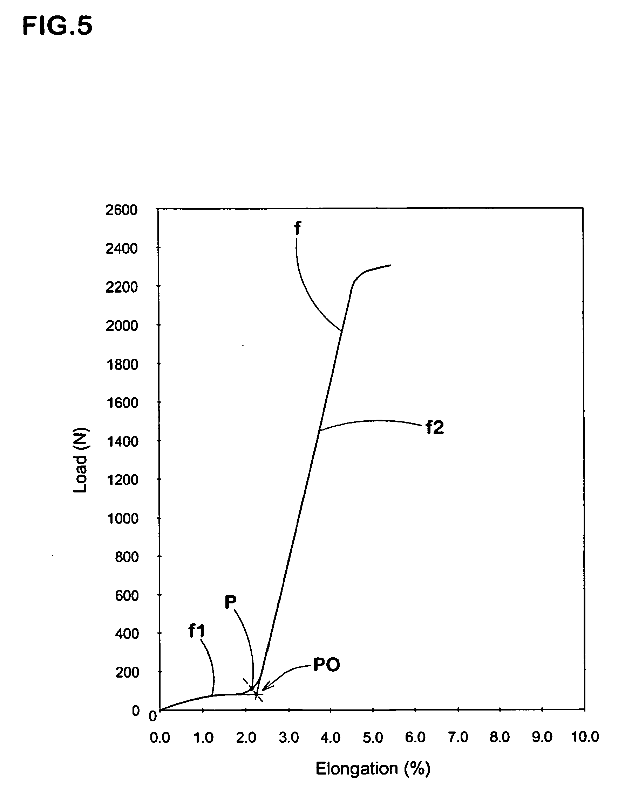

Use of a steel cord as a belt cord 10c of the spiral wind ply 12 tends to invite a molding failure by a reason that vulcanization stretch is not sufficiently secured. Therefore, it is preferable to use, as a belt cord 10c, a cord having two elasticity regions such that, as shown in Fig. 5, in a load-elongation curve "f" of the cord, it has a low elasticity region f1 between the origin O of the coordinates and an inflection point P, and a high elasticity region f2 over the inflection point P. Such a characteristic is obtained by preparing a belt cord 10c from a plurality of wires containing at least one shaped wire in the form of a wave (including a zigzag), a spiral or the like. The inflection point P is defined by an intersection point of the curve "f" and a normal line drawn thereto from an intersection point PO of an extension line from a curve of the low elasticity region f1 and an extension line from a curve of the high elasticity region f2. It is preferable that the elongation at the inflection point P is within the range of 2.0 to 3.0 % and the load at the inflection point P is within the range of 30 to 200 N, whereby vulcanization stretch can be sufficiently secured. It is preferable that the spiral wind ply 12 has the physical properties such that the tensile break strength E of the belt cord 10c in the ply 12 is from 1,830 to 3,830 N, and the ply strength S which is the product of the tensile break strength E by the number of cords Nc per 5 cm width of the ply 12 (S = E × Nc) is from 50,500 to 78,500 N. If the tensile break strength E and the ply strength S are lower than the above ranges, the spiral wind ply is short of strength and cord breaking is easy to occur at the outermost ply folding back positions Po.

Application of a belt layer having a structure as mentioned above tends to easily cause cord end loosening (belt edge separation) at axially outer edge portions of the second and third belt plies 9B, 9C which stick out axially outwardly from the spiral wind ply 12. Thus, in this embodiment, as shown in Fig. 2, protecting rubber layers 15 are interposed between axially outer edge portions of the second and third belt plies 9B and 9C so that the edge portions of the third belt ply 9C is spaced from the edge portions of the second belt ply 9B by a distance L2 of 3.0 to 4.5 mm. Each of the protecting rubber layers 15 is made of a low elasticity rubber having a complex elastic modulus E*1 of 6.0 to 12.0 MPa. If the distance L2 is less than 3.0 mm or if the complex elastic modulus E*1 exceeds 12.0 MPa, the protecting rubber layer 15 is inferior in effect of easing a shear force concentrating at the edge portions of the second and third belt plies 9B and 9C, and the cord end loosening at the belt edge portions cannot be prevented. On the other hand, if the distance L2 is more than 4.5 mm or if the complex elastic modulus E*1 is less than 6.0 MPa, move of the cord ends will become large, so the cord end loosening tends to easily occur.

The axially outer edge portions of the first and second belt plies 9A and 9B separate from the carcass 6, and the distance between them gradually increases toward axially outward of the tire. Preferably, in each of these spaces J between the belt plies and the carcass is disposed a cushion rubber 16 having an approximately triangular cross section in order to suppress occurrence of damages at the edges of the belt plies 9A and 9B. The cushion rubber 16 has a complex elastic modulus E*2 of 2.0 to 5.0 MPa and satisfies the relationship of E*2 < E*1.

While preferable embodiments of the present invention have been described with reference to the drawings, it goes without saying that the present invention is not limited to only such embodiments and various changes and modifications may be made.

### EXAMPLES

Low aspect ratio heavy duty radial tires having a size of 435/45R22.5 and a structure shown in Fig. 1 were manufactured based on the specifications shown in Table 1, and the outer diameter growth, uneven wear resistance and durability (belt edge separation, breaking of belt cord) of the tires were tested and evaluated. The results are shown in Table 1.

In Examples and Comparative Examples, the belt cord angles were the same between them, and the cord angle θ1 of the first belt ply was +50°, the cord angle θ2 of the second belt ply was +18°, the cord angle θ3 of the third belt ply was -18°, and the cord angle θ4 of the fourth belt ply was -18°. In the spiral wind ply, the tensile break strength E of the belt cord was 2,830 N and the ply strength was 64,524 N. Further, as to the belt cord in the spiral wind ply, the elongation and load at the inflection point in the load-elongation curve thereof were 2.3 % and 30 to 200 N. The complex elastic modulus E*1 of the protecting rubber layer was 10.3 MPa, and the complex elastic modulus E*2 of the cushion rubber was 9.3 MPa.

### <Outer diameter growth>

Using a drum tester, a tire was run for 25 hours under conditions of rim 22.5×14.00, inner pressure 900 kPa, load 41.68 KN and speed 40 km/hour. After the running, increase in the outer diameter of tire was measured on the tread surface, and the maximum value was obtained.

### <Uneven Wear Resistance>

Each of tires was mounted on a rim (size: 22.5×14.00), inflated to an inner pressure of 900 kPa, attached to all wheels of a 2-D.4 test car and run 10,000 km in total on roads including expressway, town road and mountain road. The depth of a shoulder groove after the running was measured. The results are shown as an index based on the result of Comparative Example 1 regarded as 100. The larger the value, the better the uneven wear resistance.

### <Belt edge separation>

After the running test for the measurement of uneven wear resistance, the tires were dismantled, and the presence of belt edge separation was observed. In case that the belt edge separation was observed, the length of separation was measured.

### <Breaking of belt cords>

After the running test for the measurement of uneven wear resistance, the tires were dismantled, and the presence of cord breaking in the edge portions of the spiral wind ply was observed.

**Table 1**

| | Com. Ex. 1 | Ex. 1 | Com. Ex. 2 | Com. Ex. 3 | Com. Ex. 4 | Ex. 2 | Ex. 3 | Com. Ex. 5 | Com. Ex. 6 |
|---|---|---|---|---|---|---|---|---|---|
| Ply width BW1 (*1) | 0.91 | 0.91 | 0.91 | 0.91 | 0.91 | 0.91 | 0.91 | 0.91 | 0.91 |
| Ply width BW2 (*1) | 0.97 | 0.97 | 0.97 | 0.97 | 0.97 | 0.97 | 0.97 | 0.97 | 0.97 |
| Ply width BW3 (*1) | 0.92 | 0.92 | 0.92 | 0.92 | 0.92 | 0.92 | 0.92 | 0.92 | 0.92 |
| Ply width BW4 (*1) | 0.44 | 0.50 | 0.50 | 0.50 | 0.69 | 0.50 | - | 0.69 | 0.50 |
| Presence of spiral wind ply | no | yes | yes | yes | yes | yes | yes | yes | yes |
| Presence of fold portion | no | yes | yes | yes | yes | yes | yes | no | *2 |
| Width CWa (*1) | - | 0.71 | 0.85 | 0.6 | 0.71 | 0.71 | 0.71 | 0.71 | 0.71 |
| Width CWb (mm) | - | 40 | 67 | 19 | 4 | 40 | 135 | 0 | 40 |
| Distance L1 (mm) | 10 | 10 | 10 | 10 | 10 | 5 | 10 | 10 | 10 |
| Distance L2 (mm) | 3.5 | 3.5 | 3.5 | 3.5 | 2.5 | 3.5 | 3.5 | 3.5 | 3.5 |
| Outer diameter growth (mm) | 4 | 1.5 | 1.5 | 2.2 | 2.5 | 1.5 | 1.5 | 2.7 | 1.5 |
| Uneven wear resistance | 100 | 150 | 150 | 100 | 100 | 150 | 150 | 100 | 150 |
| Belt edge separation | no | no | no | no | no | 10 mm | 10 mm | no | no |
| Belt cord breaking | no | no | no | no | no | no | no | yes | yes |

| | | | | | | | | | |
|---|---|---|---|---|---|---|---|---|---|
| *1: Ratio of ply width to the tread ground contact width TW *2: Another spiral wind plies were used instead of the fold portions (where wind-starting portion and wind-ending portion were present at ply edges). | | | | | | | | | |

It is observed in the Table that the tires of the Examples can suppress the outer diameter growth and have improved uneven wear resistance and durability.

## Claims

1. A radial tire (1) having an aspect ratio of at most 50 % and comprising a carcass (6) which extends from a tread portion (2) to each of bead cores (5) in bead portions (4) through sidewall portions (3), and a belt layer (7) disposed inside said tread portion (2) and radially outward of said carcass (6), wherein:
said belt layer (7) comprises a plurality of belt plies (9A-9D, 10) stacked in the radial direction in which belt cords of said belt plies (9A-9D) other than a radially outermost belt ply (10) are arranged at an angle θ of 10 to 70° with respect to the tire circumferential direction, and
said radially outermost belt ply (10) is made of a spiral wind ply (12) formed by spirally winding a ribbon-like strip (11) which comprises a topping rubber (G) and a single or a plurality of steel belt cords (10c) covered with said topping rubber (G), in the circumferential direction of tire (1), and
said radially outermost belt ply (10) has an outermost ply main body portion (10A) which extends from the tire equator (C) to ply folding back positions Po located on both sides of the tire equator (C), and outermost ply fold portions (10B1, 10B2) which are folded back at said ply folding back positions Po toward the tire equator (C) in a U shape and extend to outermost ply inner positions Pi, in which
the axial width CWb of each of said outermost ply fold portions (10B1, 10B2) is at least 5.0 mm and is at most 0.5 times the axial width CWa of said outermost ply main body portion (10A),
**characterized in that**
the tire is a heavy duty radial tire (1) and the axial width CWa of said outermost ply main body portion (10A) is from 70 to 80 % of a tread ground contact width TW.

2. The heavy duty radial tire of claim 1, wherein one of said ply fold portions (10B1) is folded back radially inward of said ply main body portion (10A), and the other (10B2) is folded back radially outward of said ply main body portion (10A).

3. The heavy duty redial tire of claim 1 or 2, wherein the axial width CWa of said outermost ply main body portion (10A) is larger than the width SW of said ribbon-like strip (11).

4. The heavy duty radial tire of any one of claims 1 to 3, wherein the belt plies (9A-9D) other than said radially outermost belt ply (10) include a first belt ply (9A) disposed on the radially innermost side in which the belt cords are arranged at an angle θ1 of 40 to 70° with respect to the tire circumferential direction, a second belt ply (9B) disposed radially outward of said first belt ply (9A) in which the belt cords are arranged at an angle θ2 which is smaller than said angle θ1 and is within the range of 10 to 45° with respect to the tire circumferential direction, and a third belt ply (9C) disposed radially outward of said second belt ply (9B) in which the belt cords are arranged at an angle θ3 which is smaller than said angle θ1 and is within the range of 10 to 45° with respect to the tire circumferential direction in the slanting direction reverse to that of said second belt ply (9B), and the axial widths BW2 and BW3 of said second and third belt plies (9B, 9C) are from 85 to 98 % of the tread ground contact width TW.

5. The heavy duty radial tire of claim 4, wherein the axially outer edge of said second belt ply (9B) and the axially outer edge of said third belt ply (9C) are apart from each other by a distance of at least 7.0 mm in the tire axial direction.

6. The heavy duty radial tire of claim 4 or 5, wherein said belt layer (7) further includes a fourth belt ply (9D) between said third belt ply (9C) and said outermost ply main body portion (10A), and the axially outer edges of said fourth belt ply (9D) are located axially inward of said outermost ply inner positions Pi.

7. The heavy duty radial tire of any one of claims 1 to 6, wherein the belt cord in said outermost belt ply (10) has a tensile break strength E of 1,830 to 3,830 N, and said outermost belt ply (10) has a ply strength S of 50,500 to 78,500 N in which the ply strength S is the product of the tensile break strength E by the number of cords Nc per 5 cm width of the outermost belt ply (S = E × Nc).

8. The heavy duty radial tire of any one of claims 1 to 7, wherein the belt cord of said outermost belt ply (10) shows a load-elongation curve (f) having a low elasticity region (f1) between the origin of the coordinates and an inflection point (P) and a high elasticity region (f2) over the inflection point (P), and the elongation at the inflection point (P) is from 2.0 to 3.0 % and the load at the inflection point (P) is from 30 to 200 N.

9. The heavy duty radial tire of any one of claims 1 to 8, wherein the width SW of said ribbon-like strip (11) is smaller than the axial width CWb of each of said outermost ply fold portions (10B1, 10B2).

## Patentansprüche

1. Radialreifen (1), der ein Querschnittsverhältnis von höchstens 50 % aufweist und eine Karkasse (6), die sich von einem Laufflächenabschnitt (2) zu einem jeden von Wulstkernen (5) und Wulstabschnitten (4) durch Seitenwandabschnitte (3) erstreckt, und eine Gürtelschicht (7) umfasst, die auf der Innenseite des Laufflächenabschnitts (2) und radial außen von der Karkasse (6) angeordnet ist, wobei:
die Gürtelschicht (7) eine Vielzahl von Gürtellagen (9A - 9D, 10) umfasst, die in der radialen Richtung gestaffelt sind, in der Gürtelkorde der Gürtellagen (9A - 9D), die andere als eine radial äußerste Gürtellage (10) sind, unter einem Winkel θ von 10 bis 70° mit Bezug auf die Umfangsrichtung des Reifens angeordnet sind, und
die radial äußerste Gürtellage (10) aus einer Spiralwicklungslage (12) hergestellt ist, die durch spiralförmiges Wickeln eines bandartigen Streifens (11), der einen Gummierungskautschuk (G) und einen einzelnen oder eine Vielzahl von Stahlgürtelkorden (10c) umfasst, die mit dem Gummierungskautschuk (G) bedeckt sind, in der Umfangsrichtung des Reifens (1) gebildet ist, und wobei
die radial äußerste Gürtellage (10) einen Hauptkörperabschnitt (10A) der äußerste Lage, der sich von dem Reifenäquator (C) zu Lagenumschlagpositionen Po erstreckt, die auf beiden Seiten des Reifenäquators (C) gelegen sind, und Schlagabschnitte (10B1, 10B2) der äußersten Lage umfasst, die an den Lagenumschlagpositionen Po in Richtung des Reifenäquators (C) in einer U-Form umgeschlagen sind und sich zu Innenpositionen Pi der äußersten Lage erstrecken, worin
die axiale Breite CWb von jedem der Schlagschnitte (10B1, 10B2) der äußersten Lage zumindest 5,0 mm und höchstens das 0,5-fache der axialen Breite CWa des Hauptkörperabschnitts (10A) der äußersten Lage beträgt,
**dadurch gekennzeichnet, dass**
der Reifen ein Schwerlast-Radialreifen (1) ist und die axiale Breite CWa des Hauptkörperabschnitts (10A) der äußersten Lage 70 bis 80 % einer Laufflächen-Aufstandsbreite TW beträgt.

2. Schwerlast-Radialreifen nach Anspruch 1,
wobei einer der Lagenschlagabschnitte (10B1) von dem Lagenhauptkörperabschnitt (10A) radial nach innen umgeschlagen ist, und der andere (10B2) von dem Lagenhauptkörperabschnitt (10A) radial nach außen umgeschlagen ist.

3. Schwerlast-Radialreifen nach Anspruch 1 oder 2,
wobei die axiale Breite CWa des Hauptkörperabschnitts (10A) der äußersten Lage größer als die Breite SW des bandartigen Streifens (11) ist.

4. Schwerlast-Radialreifen nach einem der Ansprüche 1 bis 3,
wobei die Gürtellagen (9A - 9D), die andere als die radial äußerste Gürtellage (10) sind, umfassen eine erste Gürtellage (9A), die an der radial am weitesten innen liegenden Seite angeordnet ist, in der die Gürtelkorde unter einem Winkel θ1 von 40 bis 70° mit Bezug auf die Umfangsrichtung des Reifens gelegt sind, eine zweite Gürtellage (9B), die radial außen von der ersten Gürtellage (9A) angeordnet ist, in der die Gürtelkorde unter einem Winkel θ2 gelegt sind, der kleiner als der Winkel θ1 ist und in dem Bereich von 10 bis 45° mit Bezug auf die Umfangsrichtung des Reifens liegt, und eine dritte Gürtellage (9C), die radial außen von der zweiten Gürtellage (9B) angeordnet ist, in der die Gürtelkorde unter einem Winkel θ3, der kleiner als der Winkel θ1 ist und in dem Bereich von 10 bis 45° mit Bezug auf die Umfangsrichtung des Reifens liegt, in der Neigungsrichtung umgekehrt zu der der zweiten Gürtellage (9B) gelegt sind, und die axialen Breiten BW2 und BW3 der zweiten und dritten Gürtellage (9B, 9C) 85 bis 98 % der Laufflächen-Aufstandsbreite TW betragen.

5. Schwerlast-Radialreifen nach Anspruch 4,
wobei die axial äußere Kante der zweiten Gürtellage (9B) und die axial äußere Kante der dritten Gürtellage (9C) voneinander einen Abstand von zumindest 7,0 mm in der Axialrichtung des Reifens getrennt sind.

6. Schwerlast-Radialreifen nach Anspruch 4 oder 5,
wobei die Gürtelschicht (7) ferner eine vierte Gürtellage (9D) zwischen der dritten Gürtellage (9C) und dem Hauptkörperabschnitt (10A) der äußersten Lage umfasst, und die axial äußeren Kanten der vierten Gürtellage (9D) axial innen von den Innenpositionen Pi der äußersten Lage angeordnet sind.

7. Schwerlast-Radialreifen nach einem der Ansprüche 1 bis 6,
wobei der Gürtelkord in der äußersten Gürtellage (10) eine Zugfestigkeit E von 1830 bis 3830 N aufweist, und die äußerste Gürtellage (10) eine Lagenfestigkeit S von 50500 bis 78500 N aufweist, wobei die Lagenfestigkeit S das Produkt aus der Zugfestigkeit E und der Zahl von Korden Nc pro 5 cm Breite der äußersten Gürtellage ist (S =E x Nc).

8. Schwerlast-Radialreifen nach einem der Ansprüche 1 bis 7,
wobei der Gürtelkord der äußersten Gürtellage (10) eine Last-Dehnungs-Kurve (f) zeigt, die einen Bereich (f1) mit niedriger Elastizität zwischen dem Ursprung der Koordinaten und einem Wendepunkt (P) und einen Bereich (f2) mit hoher Elastizität oberhalb des Wendepunktes (P) aufweist, und die Dehnung an dem Wendepunkt (P) 2,0 bis 3,0 % beträgt und die Last an dem Wendepunkt (P) 30 bis 200 N beträgt.

9. Schwerlast-Radialreifen nach einem der Ansprüche 1 bis 8,
wobei die Breite SW des bandartigen Streifens (11) dünner als die axiale Breite CWb von jedem der Schlagabschnitte (10B1, 10B2) der äußersten Lage ist.

## Revendications

1. Pneumatique radial (1) ayant un rapport d'aspect au maximum de 50 % et comprenant une carcasse (6) qui s'étend depuis une portion formant bande de roulement (2) vers chacune des âmes de talons (5) dans des portions de talons (4) via des portions formant parois latérales (3), et une couche de ceinture (7) disposée à l'intérieur de ladite portion formant bande de roulement (2) et radialement à l'extérieur de ladite carcasse (6), dans lequel :
ladite couche de ceinture (7) comprend une pluralité de nappes de ceinture (9A-9D, 10) empilées dans la direction radiale, dans laquelle des câblés de ceinture desdites nappes de ceinture (9A-9D) autres qu'une nappe de ceinture radialement tout à fait extérieure (10) sont agencées sous un angle θ de 10 à 70° par rapport à la direction circonférentielle du pneumatique, et
ladite nappe de ceinture radialement tout à fait extérieure (10) est réalisée d'une nappe enroulée en spirale (12) formée en enroulant en spirale une bande semblable à un ruban (11) qui comprend un caoutchouc d'enrobage (G) et un unique câblé ou une pluralité de câblés de ceinture en acier (10c) couvert(s) avec ledit caoutchouc d'enrobage (G), dans la direction circonférentielle du pneumatique (1),
et
ladite nappe de ceinture radialement tout à fait extérieure (10) comprend une portion de corps principal de nappe extérieure (10A) qui s'étend depuis l'équateur du pneumatique (C) jusqu'à des positions de rebroussement de nappes Po situées sur les deux côtés de l'équateur du pneumatique (C), et des portions de pliage de nappes extérieures (10B1, 10B2) qui sont repliées au niveau desdites positions de rebroussement de nappes Po vers l'équateur du pneumatique (C) dans une forme en U et s'étendent jusqu'à des positions intérieures de la nappe tout à fait extérieure Pi, dans lequel
la largeur axiale CWb de chacune desdites portions de pliage de nappes extérieures (10B1, 10B2) est au moins 5,0 mm et est au plus 0,5 fois la largeur axiale CWa de ladite portion de corps principal de nappe extérieure (10A),
**caractérisé en ce que**
le pneumatique est un pneumatique radial pour charges lourdes (1) et la largeur axiale (CWa) de ladite portion de corps principal de nappes extérieures (10A) est de 70 à 80 % d'une largeur de contact au sol TW de la bande de roulement.

2. Pneumatique radial pour charges lourdes selon la revendication 1, dans lequel l'une desdites portions de pliage de nappe (10B1) est repliée radialement vers l'intérieur de ladite portion de corps principal de nappe (10A) et l'autre (10B2) est repliée radialement vers l'extérieur de ladite portion de corps principal de nappe (10A).

3. Pneumatique radial pour charges lourdes selon la revendication 1 ou 2, dans lequel la largeur axiale CWa de ladite portion de corps principal de nappe extérieure (10A) est supérieure à la largeur SW de ladite bande semblable à un ruban (11).

4. Pneumatique radial pour charges lourdes selon l'une quelconque des revendications 1 à 3, dans lequel les nappes de ceinture (9A-9B) autres que ladite nappe de ceinture radialement tout à fait extérieure (10) incluent une première nappe de ceinture (9A) disposée sur le côté radialement tout à fait intérieur dans lequel les câblés de ceinture sont arrangés sous un angle θ1 de 40 à 70° par rapport à la direction circonférentielle du pneumatique, une seconde nappe de ceinture (9B) disposée radialement à l'extérieur de ladite première nappe de ceinture (9A) dans laquelle les câblés de ceinture sont arrangés sous un angle θ2 qui est plus petit que ledit angle θ1 et qui tombe dans une plage de 10 à 45° par rapport à la direction circonférentielle du pneumatique, et une troisième nappe de ceinture (9C) disposée radialement à l'extérieur de ladite seconde nappe de ceinture (9B) dans laquelle les câblés de ceinture sont arrangés sous un angle θ3 qui est plus petit que ledit angle θ1 et qui tombe dans la plage de 10 à 45° par rapport à la direction circonférentielle du pneumatique avec une direction d'inclinaison inverse à celle de ladite seconde nappe de ceinture (9B), et les largeurs axiales BW2 et BW3 de ladite seconde et ladite troisième nappe de ceinture (9B, 9C) sont de 85 à 98 % de la largeur de contact au sol TW de la bande de roulement.

5. Pneumatique radial pour charges lourdes selon la revendication 4, dans lequel le bord axialement extérieur de ladite seconde nappe de ceinture (9B) et le bord axialement extérieur de ladite troisième nappe de ceinture (9C) sont écartés l'un de l'autre d'une distance d'au moins 7,0 mm dans la direction axiale du pneumatique.

6. Pneumatique radial pour charges lourdes selon la revendication 4 ou 5, dans lequel ladite couche de ceinture (7) inclut encore une quatrième nappe de ceinture (9B) entre ladite troisième nappe de ceinture (9C) et ladite portion de corps principal de nappe extérieure (10A) et les bords axialement extérieurs de ladite quatrième nappe de ceinture (9B) sont placés axialement à l'intérieur desdites positions intérieures de nappe tout à fait extérieure Pi.

7. Pneumatique radial pour charges lourdes selon l'une quelconque des revendications 1 à 6, dans lequel le câblé de ceinture dans ladite nappe de ceinture tout à fait extérieure (10) présente une résistance à la rupture en traction E de 1830 à 3830 N, et ladite nappe de ceinture tout à fait extérieure (10) présente une résistance de nappe S de 50 500 à 78 500 N, où la résistance de nappe S est le produit de la résistance à la rupture en traction (E) par le nombre de câblés Nc pour une largeur de 5 cm de la nappe de ceinture tout à fait extérieure (S = E x Nc).

8. Pneumatique radial pour charges lourdes selon l'une quelconque des revendications 1 à 7, dans lequel le câblé de ceinture de ladite nappe de ceinture tout à fait extérieure (10) présente une courbe charge/allongement (f) ayant une région à faible élasticité (f1) entre l'origine des coordonnées et un point d'inflexion (P), et une région à forte élasticité (f2) au-dessus du point d'inflexion (P), et l'allongement au niveau du point d'inflexion (P) est de 2,0 à 3,0 %, et la charge au niveau du point d'inflexion (P) est de 30 à 200 N.

9. Pneumatique radial pour charges lourdes selon l'une quelconque des revendications 1 à 8, dans lequel la largeur SW de ladite bande semblable à un ruban (11) est plus petite que la largeur axiale CWb de chacune desdites portions repliées de la nappe tout à fait extérieure (10B1, 10B2).
